Europäisches Patentamt

European Patent Office

Office européen des brevets

(11) Veröffentlichungsnummer: **0 439 706 A1**

# EUROPÄISCHE PATENTANMELDUNG

(21) Anmeldenummer: 90122042.6

(22) Anmeldetag: 17.11.90

(51) Int. Cl.5: **E04F 13/08**, E04F 13/14

(30) Priorität: 29.01.90 DE 4002512

(43) Veröffentlichungstag der Anmeldung:
**07.08.91 Patentblatt 91/32**

(84) Benannte Vertragsstaaten:
**AT BE CH DE DK ES FR GB IT LI NL**

(71) Anmelder: **fischerwerke Artur Fischer GmbH
& Co. KG
Weinhalde 14 - 18
W-7244 Waldachtal 3/Tumlingen(DE)**

(72) Erfinder: **Fischer, Artur, Prof. Dr. h. c.
Weinhalde 34
W-7244 Waldachtal 3/Tumlingen(DE)**

(54) Befestigung für Fassadenplatten.

(57)
2.1 Zur Befestigung (2) von Fassadenplatten können an deren Rückseite Bohrungen mit Hinterschneidung angebracht werden, in die Befestigungselemente formschlüssig verankerbar sind.
2.2 Es wird eine Befestigung vorgeschlagen, bei der im Übergangsbereich zwischen Schaft und Konus eines Befestigungsbolzens (3) ein aus einem weichen Nichteisenmetall bestehendes Spreizelement mit Längsschlitzen angeordnet ist, das im aufgeweiteten Zustand in die Hinterschneidung der Fassadenplatte eingreift.

Fig. 2

## BEFESTIGUNG FÜR FASSADENPLATTEN

Die Erfindung betrifft eine Befestigung für Fassadenplatten mit einem in Bohrlöcher mit Hinterschneidung festsetzbaren Befestigungsbolzen gemäß der Gattung des Anspruches 1.

Es sind Befestigungselemente bekannt, die an ihrem in ein Bohrloch einsetzbaren Ende einen Konus besitzen, auf den eine Spreizhülse aufschiebbar ist. Beim Aufschieben der Spreizhülse weitet sich diese auf und kann somit formschlüssig in eine Hinterschneidung des jeweiligen Bohrloches eingreifen.

Die in der Regel aus Keramik, Kunststein oder Marmor bestehenden Fassadenplatten weisen eine verhältnismäßig geringe Dicke auf, so daß im Bereich des Bohrloches nur noch eine geringe Überdeckung vorhanden ist. Beim Auftreiben der Spreizhülse mit Hammerschlägen, insbesondere bei engeren Bohrlöchern, kann es daher zu Abplatzungen oder Durchbrechungen der Fassadenplatte kommen. Ferner ist auch die Toleranzempflindlichkeit einer auf Spreizung beruhenden Befestigung, insbesondere bei sehr dünnen Fassadenplatten, ungünstig, da ein Ausgleich über zusätzliche Verkeilung wegen Ausbruchgefahr des Bohrloches nicht möglich ist.

Der Erfindung liegt die Aufgabe zugrunde, für dünnwandige und poröse Fassadenplatten eine einfach herstellbare, spreizdruckfreie Befestigung zu schaffen, die auch bei größeren Toleranzen der Bohrlöcher hohe Haltekräfte erlaubt.

Die Lösung dieser Aufgabe wird durch die im Anspruch 1 angegebenen Merkmale erreicht. Der in dem Bohrloch mit Hinterschneidung eingesetzte Befestigungsbolzen weist zur Bohrlochwandung einen Ringspalt auf. In diesen Spalt wird ein mit Längsschlitzen versehenes Spreizelement aus einem weichen Nichteisenmetall beispielsweise mit einer Vorrichtung eingedrückt, bis der Spalt vollständig ausgefüllt ist. Da das Spreizelement aus einem sehr weichen Material besteht, ergibt sich eine vollständige Verfüllung des Ringspaltes. Des weiteren werden aufgrund der gleichmäßigen Druckverteilung Spannungsspitzen vermieden, die zu einem Ausbrechen des Bohrloches führen könnten. Nach der Verankerung wird mit dem die Rückseite der Fassadenplatte überragenden Gewindeschaft des Bolzens die Fassadenplatte an eine an einem Tragmauerwerk angebrachten Unterkonstruktion befestigt. Durch Verwendung eines weichen Nichteisenmetalles als Spreizelement zur Ausfüllung der Hinterschneidung wird eine nahezu spreizdruckfreie Befestigung mit hohen Haltekräften erreicht. Aufgrund der leichten, plastischen Verformbarkeit des Spreizelementes ergibt sich ferner eine Unempfindlichkeit gegen Bohrlochtoleranzen.

Ein besonders geeignetes Material für das Spreizelement ist Zinn bzw. eine Zinn-Zink-Legierung. Durch die geringe Festigkeit des Zinns entsteht eine elastische Befestigung, die in der Lage ist, temperaturbedingte Verschiebungen der Fassadenplatte aufzufangen. Bei etwas dickeren Fassadenplatten empfiehlt es sich, eine etwas größere Bohrlochtiefe zu wählen und zur Ausfüllung des längeren zylindrischen Teils des Bohrloches eine Distanzhülse aus härterem Material, vorzugsweise Edelstahl, zu verwenden. Mit einer solchen härteren Distanzhülse erfolgt eine günstigere Druckübertragung beim Aufschieben des weichen Spreizelementes auf den Konus des Bolzens.

Um das Bohrloch gegen eindringendes Wasser abzudichten, kann an der Bohrlochöffnung eine Kunststoffscheibe dicht abschließend anliegen.

Zur Vermeidung eines Mitdrehen des Bolzens beim Aufschrauben der Mutter können auf dem Schaft und/oder Konus des Bolzens Rippen angeordnet sein.

Die Erfindung wird nachfolgend anhand der Zeichnung näher erläutert.

Es zeigen:

Figur 1  den im Bohrloch mit Hinterschneidung eingesetzten Befestigungsbolzen,

Figur 2  die an einer Unterkonstruktion befestigte Fassadenplatte.

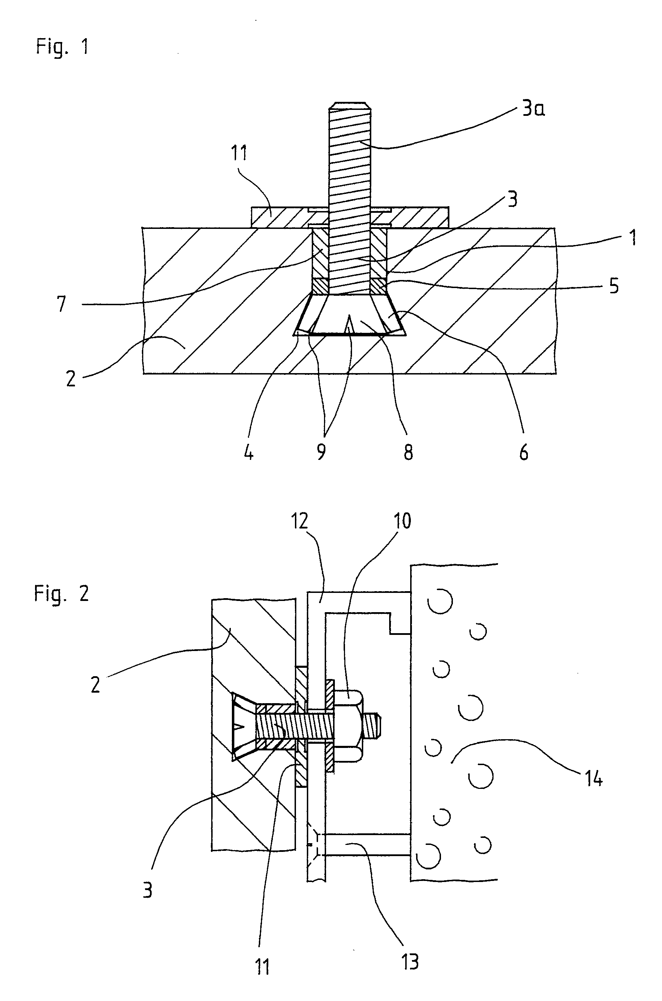

Figur 1 zeigt den in dem Bohrloch 1 der Fassadenplatte 2 verankerten Befestigungsbolzen 3. In das beispielsweise vom Hersteller der Fassadenplatte bereits vorbereitete Bohrloch 1 mit Hinterschneidung 4 wird der Befestigungsbolzen 3 mit dem an seinem Schaft 3a angeordneten Spreizelement 5 soweit eingeschoben, bis die Stirnseite des Bolzens 3 am Bohrlochgrund aufsitzt. Mit einer zangenartigen Drückvorrichtung (nicht dargestellt) wird das mit Längsschlitzen 6 versehene Spreizelement 5 direkt oder über die ebenfalls über den Schaft gestülpte Distanzhülse 7 auf den Konus 8 des Bolzens 3 aufgedrückt. Da das Spreizelement 5 aus einem weichen Material wie Zinn oder einer Zinn-Zink-Legierung besteht, wird der Ringspalt zwischen Konus 8 und Hinterschneidung 4 des Bohrloches 1 vollständig schon beim Aufbringen relativ geringer Drücke ausgefüllt. Der Überstand des Spreizelementes 5 bzw. der Distanzhülse 7 vor der Verankerung ist so bemessen, daß bei ausgeführter Verankerung die Stirnseite des Spreizelementes bzw. der Distanzhülse bündig mit der Rückseite der Fassadenplatte 2 abschließt. Durch die am Konus 8 des Bolzens 3 angeordneten und sich in das Spreizelement 5 eingrabenden Rippen 9 ist der Bozen 3 beim Aufdrehen einer Mutter 10 gegen Verdrehen gesichert.

Nach der Verankerung des Befestigungselementes wird zur Abdichtung des Bohrloches 1 über den überstehenden Gewindeschaft des Bolzens 3 ein Kunststoffdeckel 11 gestülpt. Zur Befestigung der Fassadenplatte 2 gemäß Figur 2 wird der Gewindeschaft des Befestigungsbolzens 3 mittels der Mutter 10 an einer Unterkonstruktion 12 befestigt. Die Unterkonstruktion 12 ist in herkömmlicher Weise mit Befestigungselementen 13 an der Wandoberfläche des Mauerwerks 14 angebracht.

## Patentansprüche

1. Befestigung für Fassadenplatten mit einem in Bohrlöcher mit Hinterschneidung festsetzbaren Befestigungsbolzen, der an seinem vorderen Ende einen Konus und an seinem hinteren Ende einen Gewindeschaft aufweist, **dadurch gekennzeichnet,** daß im Übergangsbereich zwischen Schaft (3a) und Konus (8) ein aus einem weichen Nichteisenmetall bestehendes Spreizelement (5) mit Längsschlitzen (6) angeordnet ist, das im aufgeweiteten Zustand in die Hinterschneidung (4) der Fassadenplatte (2) eingreift.

2. Befestigungselement nach Anspruch 1, **dadurch gekennzeichnet,** daß das Spreizelement (5) aus Zinn oder einer Zinn-Zink-Legierung besteht.

3. Befestigungselement nach Anspruch 1, **dadurch gekennzeichnet,** daß auf dem Schaft des Bolzens (3) im Anschluß an das Spreizelement ( 5) eine aus hartem Material, vorzugsweise Edelstahl, bestehende Distanzhülse (7) angeordnet ist.

4. Befestigungselement nach Anspruch 1, **dadurch gekennzeichnet,** daß die Öffnung des Bohrloches (1) von einem Kunststoffdeckel (11) dicht abgeschlossen ist.

5. Befestigungselement nach Anspruch 1, **dadurch gekennzeichnet,** daß auf dem Schaft und/oder Konus (8) des Bolzens (3) längsverlaufende Rippen (9) angeordnet sind.

Fig. 1

Fig. 2

Europäisches
Patentamt

**EUROPÄISCHER
RECHERCHENBERICHT**

Nummer der Anmeldung

**EP 90 12 2042**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-U-8 701 693 (FLACHGLAS AG)<br>* Seite 4, Zeile 25 - Seite 6, Zeile 8; Abbildungen 1,2 *<br>– – – | 1 | E 04 F 13/08<br>E 04 F 13/14 |
| Y,A | DE-A-3 110 101 (FINK)<br>* Seite 8, Zeile 15 - Seite 11, Zeile 6; Abbildungen 1,2 *<br>– – – | 1,4 | |
| A | DE-A-2 916 925 (ICKLER AG)<br>* Seite 5, Zeile 98 - Seite 6, Zeile 131 ** Seite 7, Zeile 163 - Zeile 192; Abbildungen 2,3 *<br>– – – | 1,3,4 | |
| A | GB-A-3 119 52 (SPEAKER)<br>* Seite 2, Zeile 73 - Seite 3, Zeile 13; Abbildungen 1-7 *<br>– – – – – | 1,4,5 | |

| RECHERCHIERTE SACHGEBIETE (Int. Cl.5) |
|---|
| E 04 F |

Der vorliegende Recherchenbericht wurde für alle Patentansprüche erstellt

| Recherchenort | Abschlußdatum der Recherche | Prüfer |
|---|---|---|
| Den Haag | 19 April 91 | AYITER J. |

**KATEGORIE DER GENANNTEN DOKUMENTE**

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie,
übereinstimmendes Dokument